# EUROPÄISCHE PATENTSCHRIFT

(11) **EP 1 099 803 B1**
(45) Veröffentlichungstag und Bekanntmachung des Hinweises auf die Patenterteilung: **16.02.2005**
(21) Anmeldenummer: 00117569.4
(22) Anmeldetag: 16.08.2000
(51) Int. Cl.: E03F 1/00

(54) **Versickerungsvorrichtung**
Infiltration device
Dispositif d'infiltration

(30) Priorität: 11.11.1999 DE 29919821 U
(43) Veröffentlichungstag der Anmeldung: 16.05.2001
(73) Patentinhaber: REHAU AG + Co, 95111 Rehau (DE)
(72) Erfinder: Lünstedt, Frank, c/o REHAU AG + Co, 95111 Rehau (DE); Liebel, Volker, c/o REHAU AG + Co, 95111 Rehau (DE)

(56) Entgegenhaltungen:
- DE-U- 29 607 748
- DE-U- 29 708 322
- US-A- 5 253 807

## Beschreibung

Die Erfindung betrifft eine Versickerungsvorrichtung für Niederschlagswasser mit einem Schacht, sowie einem in diesem befindlichen Drosselelement, wobei der Schacht einen Wasserzulauf, einen Wasserüberlauf und einen Wasserablauf aufweist, wobei der freie Strömungsquerschnitt des Wasserablaufes veränderbar ist, und wobei das Drosselement lösbar im Schacht positioniert ist.

Eine gattungsfreie Versorgungsvorrichtung ist eine Regenwasser-Versickerung über ein Rigolen-System mit Anstauregulierung. Dabei ist die Rigole, welche ein mit Kies gefülltes Volumen ist, in das im unteren Bereich Rohre verlegt sind, die über in ihrer Außenwand vorhandene Öffnungen das Regenwasser aufnehmen, welches von beispielsweise versiegelten Flächen- oder Mulden-Rigolen in die Kies-Rigole hineinläuft, um dieses dann über einen Wasserzulauf in eine Versickerungsvorrichtung einzuleiten. Das durch die Versickerungsvorrichtung hindurchlaufende Wasser kann dabei gedrosselt werden und wird über einen Wasserablauf in ein Kanalisationssystem oder eine weitere Rigole weitergeleitet.

Eine derartige gattungsgemäße Vorrichtung ist aus der DE 197 00 985 bekannt.
Diese Versickerungseinrichtung besteht aus einem Behälter mit einem Zulauf, ggf. einem Überlauf und einen Abfluß. Der freie Strömungsquerschnitt des Ablaufes soll veränderbar sein.

Diese Versickerungsvorrichtung soll eine Regulierung der Abfluß-Charakteristiken ermöglichen, die sich aus dem bekannten Stand der Technik bei dieser Art der Entwässerung nicht einstellen lassen soll.

Dies soll dadurch erreicht werden, daß eine Stelleinrichtung zwischen dem Abfluß und einem oberen Bereich des Behälters angeordnet ist, wobei die Stelleinrichtung in Verbindung zu einem Regelorgan bzw. Verschlußglied zur Veränderung des Strömungsquerschnittes steht. Dieses Drosselelement ist fest mit dem Schacht über eine Verschraubung oder Verschweißung verbunden, so daß anfallende Reparaturen bei Nichtfunktionieren dieser Versickerungsvorrichtung aufwendige Reparaturmaßnahmen erfordern. So muß der Schacht durch qualifiziertes Personal bestiegen und vor Ort nach Möglichkeiten für Reparaturen als auch für vorgreifende Wartungen gesucht werden.
Weiterhin ist der Aufbau, der über aufwendige Verstellvorrichtungen mit Fembetätigungen versehenen Drosselelementes sehr komplex und damit auch sehr teuer. Im Extremfall kann eine derart nicht funktionierende Versickerungsvorrichtung nur durch den Austausch des kompletten Schachtes ersetzt werden, was wiederum sehr zeit- und kostenintensiv ist.

Ein weiterer Nachteil dieser Versickerungsvorrichtung wird darin gesehen, daß die im Niederschlagswasser enthaltenen festen Bestandteile zum einen zu einer Verschmutzung der Versickerungsvorrichtung führen und zum anderen die kompliziert aufgebauten Verstellvorrichtungen mit Fernbetätigungen in ihrer Funktion stark beeinträchtigen.

Hierzu ist es notwendig, derartige Versickerungsvorrichtungen nach dem Stand der Technik regelmäßig zu kontrollieren und zu reinigen. Dies ist wiederum mit hohem Aufwand verbunden, wenn in dem Schacht eine komplizierte Verstellvorrichtung mit Fernbetätigung unlösbar eingebracht ist

Die DE-U-29607748 offenbart eine Versickerungsvorrichtung für Niederschlagswasser mit einem Schacht sowie einem in diesem befindlichen Drosselelement, wobei der Schacht einen Wasserzulauf, einen Wasserüberlauf und einen Wasserablauf aufweist. Der freie Strömungsquerschnitt des Wasserablaufes ist veränderbar und das Drosselelement ist lösbar im Schacht positioniert. Die Versickerungsvorrichtung besteht aus zwei ineinandergeschobenen und in Bezug aufeinander verschiebbaren Zylindem, wobei ein Zylinder der Schacht ist und der andere Zylinder das Drosselelement. Da die Zylinder ineinandergeschoben sind, besteht zwischen der Innenwand des Zylinders und der Außenwand des Zylinders kein Zwischenraum, da diese sonst nicht in Bezug aufeinander verschiebbar sind. Das Drosselelement weist einen Wasserzulauf auf und von diesem abgewandt Wasserabtaufoffnungen.
Gemäß der Lehre der DE-U-29607748 ist das Drosselelement um seine Längsachse drehbar, sodass das über den Wasserzulauf des Schachtes eintretende Wasser über die Öffnung des Drosselelementes in den Stauraum innerhalb des Drosselelementes eintreten und über die Öffnungen und den Wasserablauf des Schachtes wieder austreten kann. Die ausströmende Wassermenge soll dabei durch eine verschiedene-Anzahl wesentlich kleinerer Öffnungen und deren Positionierung entweder an der Wand des Schachtes oder an dem Wasserablauf des Schachtes regulierbar sein. Um dies zu realisieren, ist zwischen der Innenwand des Schachtes und der Außenwand des Drosselelementes ein Ringspalt, der es ermöglicht, beide Teile gegeneinander zu verdrehen. Der Ringspalt ist aber nicht dazu geeignet, als Stauraum für die Versickerungsvorrichtung zu dienen. Eine Arretierung des Drosselelementes am Schacht erfolgt durch einen gegenüber der Überlaufkante erhöhten Rand mit Bohrungen im Schacht, die mit Bohrungen in einer Lasche des Drosselelementes kommunizieren und über Verplombung oder Verschraubung fixierbar sind.

Die DE-U-29708322 offenbart eine Versickerungsvorrichtung für Niederschlagswasser, bestehend aus einem innerhalb eines Schachtes angeordneten Rohrstutzen mit einem Wasserzulauf, einem innerhalb des Schachtes angeordneten Wasserablauf und einem Wasserüberlauf, wobei die durch den Wasserablauf austretende Wassermenge durch ein Drosselelement regulierbar ist und wobei das durch das Drosselelement fließende Wasser durch eine Ablauföffnung im Schacht ins Freie gelangt. Das Drosselelement ist ein als Blenden-Schieber-System ausgebildeter Drosselverschluss, dessen Bewegungsmechanik unterhalb des Schachtdeckels im Inneren des Schachtes angeordnet ist. Der freie Strömungsquerschnitt des durch die Ablauföffnung abfließenden Wassers ist durch das Drosselelement veränderbar.
Das Drosselelement ist durch eine Bewegungsmechanik, welche über eine Betätigungsstange, Spindel oder ein ähnliches Betätigungselement mit dem Drosselelement verbunden ist, vertikal verfahrbar. Das Drosselelement ist somit nicht lösbar im Schacht positioniert. Zwischen der Zulaufseite des Drosselelementes und der Zulaufseite des Schachtes ist kein Stauraum vorhanden. Der Ablauf der Abflussdrossel, welcher durch das Drosselelement in seinem Querschnitt variierbar ist, ist nicht dichtend mit dem Ablauf des Schachtes verbunden.

Hier setzt die Erfindung ein, die es sich zur Aufgabe gestellt hat, die Nachteile des bekannten Standes der Technik zu vermeiden und eine Versickerungsvorrichtung aufzuzeigen, die wirtschaftlich und kostengünstig herstellbar ist, die sehr leicht und schnell handhabbar und zugänglich ist, die eine dauerhafte Funktionsfähigkeit gewährleistet, und bei der der Schacht und das Drosselelement schnell demontierbar und reinigbar sind.

Diese Aufgabe wird durch eine Versickerungsvorrichtung mit den in Patentanspruch 1 aufgeführten Merkmalen gelöst. Zweckmäßige Ausführungsform der erfindungsgemäßen Versickerungseinrichtung werden durch die in den Unteransprüchen aufgeführten Merkmale definiert.

Die gemäß der vorliegenden Erfindung zu erzielenden Vorteile bestehen darin, daß das Drosselelement lösbar im Schacht positioniert ist, daß zwischen dem Drosselelement und dem Schacht ein Stauraum ist und daß die Wasserabläufe des Drosselelementes und des Schachtes dichtend hintereinander liegen.

Hierdurch ist es ohne material- und zeitintensiven Aufwand möglich, das Drosselelement aus dem Schacht zu entnehmen, beide zu reinigen, zu kontrollieren und wieder zu montieren. Ein weiterer Vorteil wird darin gesehen, daß durch die einfache und schnelle Demontage des Drosselelementes der Wasserzulauf beeinflußbar ist, da dieser in einer vorteilhaften Ausführungsform variabel einstellbar oder anstaubar ist.

Weiterhin vorteilhaft wird gesehen, daß die Ablaufseite des Drosselelementes einen Abfluß aufweist, der annähernd dem Ablauf des Schachtes entspricht.
In einer weiteren vorteilhaften Ausführungsform hintergreift das Drosselelement mit wenigstens einem freien Ende ein Arretierelement des Schachtes.
Dies ist insofern vorteilhaft, da das Drosselelement sehr einfach und schnell in dem betreffenden Schacht fixiert und die Abläufe des Drosselelementes und des Schachtes dichtend hintereinander fixiert sind.

Weiterhin vorteilhaft wird gesehen, daß das Drosselelement als Behälter ausgeführt ist und an seinem einen freien Ende eine Öffnung aufweist.
Hierdurch wird zum einen erreicht, daß die mit dem Niederschlagswasser ankommenden festen Bestandteile, welche durch den Zulauf in den Schacht bzw. das Drosselelement gelangen, in diesen verbleiben und so nicht in die am Ablauf des Schachtes befindlichen Kanalsysteme eindringen, zum anderen wirkt diese Öffnung des Drosselelementes gleichzeitig als Überlauf, sollte es größere Mengen an Niederschlagswasser geben, die durch die Versickerungseinrichtung geführt werden müssen.

Zur sicheren Fixierung weist das Drosselelement im Bereich seines freien Endes ein Klemmelement auf, welches vorteilhafterweise die Ablaufseite des Drosselelementes an der Ablaufseite des Schachtes verspannt.
Dadurch kann das Drosselelement sicher und schnell im Schacht fixiert werden, ohne daß die Funktionssicherheit darunter leidet.

Ein weiterer Vorteil wird darin gesehen, daß durch die Entspannung des Klemmelementes das Drosselelement aus dem Schacht und zwar mit Hilfe des Klemmelementes entnehmar ist. Hier wird vorteilhafterweise die Funktion des Fixierens und des Transportierens in einem Element vereinigt, was sich positiv auf die Kosten einer derartigen Versickerungsvorrichtung auswirkt.

In einer besonderen Ausführungsform ist das Klemmelement ein beweglicher Bügel, der diese Funktion sicher erfüllt.

Die Erfindung lehrt jedoch weiter, daß das Klemmelement ein Knebel, ein Exzenter, ein Keil oder ähnlich geartete Teile sein können.

Nachfolgend soll die vorliegende Erfindung anhand einer dieser nicht beschränkten Darstellung näher erläutert werden.
Es zeigt:

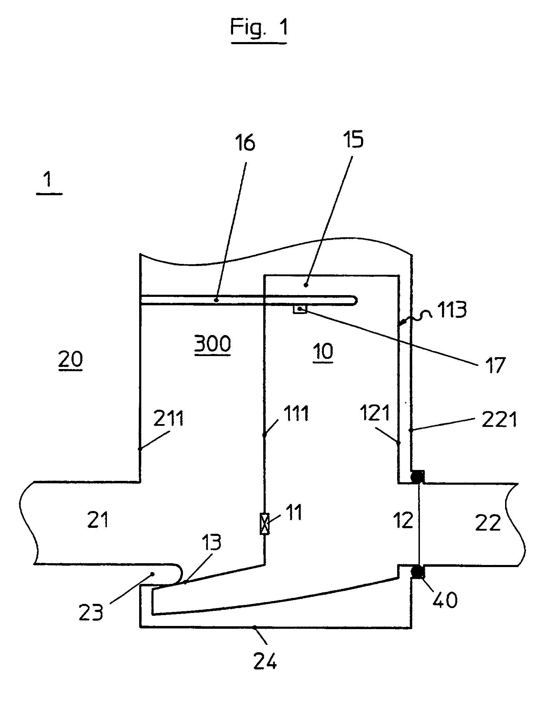

Figur 1 Schnittdarstellung durch eine Ausführungsform der erfindungsgemäßen Versickervorrichtung.

In Figur 1 ist die erfindungsgemäße Versickerungsvorrichtung mit Niederschlagswasser (1) aufgezeigt, die einen Schacht (20) sowie ein in diesem befindlichen Drosselelement (10) aufweist. Der Behälter (20) der erfindungsgemäßen Vorrichtung für Niederschlagswasser (1) kann hier einen zylindrischen oder mehreckigen Querschnitt aufweisen. Der Behälter (20) der Versickerungsvorrichtung (1) weist einen Wasserzulauf (21) und einen Wasserablauf (22) auf, welche beide oberhalb des Bodens (24) des Schachtes (20) angeordnet sind. In dieser Ausführungsform weist der Schacht (20) zwischen dem Boden (24) und dem Zulauf (21) ein Arretierelement (23) auf, welches die Form eines Vorsprunges bzw. einer Nase besitzt. Dieses Arretierelement (23) kann wie in diesem Ausführungsbeispiel einstückig mit dem Behälter (20) verbunden sein, kann jedoch auch in anderen Ausführungsformen durch nach der Herstellung in den Behälter integrierten Arretierelementen bestehen. Das im Schacht (20) integrierte Drosselelement (10) weist in dieser hier dargestellten Ausführungsform eine annähernd stiefelförmige Gestalt auf. Zwischen der Zulaufseite (111) des Drosselelementes (10) und der Zulaufseite (211) des Schachtes (20) befindet sich der Stauraum (300). In diesem Stauraum (300) sammelt sich das über den Zulauf (21) des Schachtes (20) ankommende Wasser, welches nicht sofort durch den Zulauf (11) des Drosselelementes (10) abgeleitet werden kann. Der Zulauf (11) des Drosselelementes (10) kann in seiner einfachsten Ausführung ein einfaches Loch sein, welches aber in weiteren Ausführungsformen mit Filterelementen versehen sein kann. Weiterhin lehrt die Erfindung, daß der Zulauf (11) variabel einstellbar ist, was dadurch realisiert werden kann, daß das Drosselelement (10) aus dem Schacht (20) entnommen und der Zulauf (11) entsprechend den Anforderungen bzgl. der durchströmenden Wassermengen an die Versickerunsgvorrichtung (1) verkleinert oder vergrößert werden kann. Gleichsam ist es möglich, daß der Zulauf (11) des Drosselelementes (1) verstellbar ausgeführt ist.

An der dem Zulauf (11) gegenüberliegenden Seite des Drosselelementes (10) ist der Ablauf (12) in der hier dargestellten Ausführungsform angebracht. Der Ablauf (12) des Drosselelementes (10) weist eine ähnliche Größe wie der Ablauf (22) des Schachtes (20) auf und ist in dieser Ausführungsform durch eine Dichtung (40) vom Schacht (20) getrennt.

Das untere frei Ende (13) des Drosselelementes (10) hintergreift fixierend das Arretierelement (23), so daß der Ablauf (12) des Drosselelementes (10) flüssigkeitsdicht mit dem Ablauf (22) des Schachtes (20) verbunden ist. Am oberen Ende (113) des Drosselelemetens (10) ist das Klemmelement (16) angebracht. Dieses Klemmelement (16), welches in einem Ausführungsbeispiel ein beweglicher Bügel ist, fixiert das Drosselelement (10) fest im Schacht (20). Dadurch wird die Ablaufseite (121) des Drosselelementes (10) an der Ablaufseite (221) des Schachtes (20) verspannt.
Die Dimensionierung der Verspannung kann zum einen über die Länge des Klemmelementes (16) realisiert werden, wobei zur Sicherheit ein Anschlagelement (17) am Drosselelement (10) integriert ist, welches die Endposition für das Klemmelement (16) darstellt. Weiterhin liegt es im Rahmen der Erfindung, das Anschlagelement (17) an der Zulaufseite (211) des Behälters (20) zu integrieren, wo es die gleiche Funktion erfüllt.

Am Zulauf (21) des Schachtes (20) erfolgt die Zuführung von Wasser, welches beispielsweise aus einer Kies-Rigole kommend nach oder während Niederschlägen angesammelt in den Schacht (20) einläuft. Das einkommende Wasser sammelt sich im Stauraum (300) zwischen dem Drosselelement (10) und dem Schacht (20) und kann parallel über den Zulauf (11) des Drosselelementes (10) und den Ablauf (12) des Drosselelementes (10) sowie dem Ablauf (22) des Schachtes (20) in eine weitere Rigole bzw. auch nach der letzten Rigole in ein Vorfluter eingeleitet werden. Der Einsatz einer derartigen Versickerungsvorrichtung kann an allen Stellen erfolgen, in denen Niederschlagswasser nicht sofort in Kanalsysteme einleitbar ist, z. B. bei versiegelten Flächen, bei der Sammlung im Regenwasser von Dachflächen und ähnlichen.
Sollte das zulaufende Wasser das dimensionierte Volumen des Stauraumes (300) übersteigen, kann es in der hier dargestellten vorteilhaften Ausführungsform über die Öffnung (15) in das als Behälter ausgeführte Drosselelement (10) ablaufen, ohne daß das Niederschlagswasser über den oberen Rand der Rigole angestaut wird. In weiteren Ausführungsformen der erfindungsgemäßen Versickerungsvorrichtung (1) kann der Zulauf (11) des Drosselelementes (10) auch am freien Ende (113) des Drosselelementes (10) angebracht sein, so kann die erfindungsgemäße Versickerungsvorrichtung (1) für jeden Anwendungsfall dimensioniert werden und damit störungssicher funktionieren.
In weiteren Ausführungsformen, beispielsweise bei einem Schacht (20) mit sehr großem Außendurchmesser und großen, zu bewältigenden Wassermengen, können an der Zulaufseite (111) des Drosselelementes (10) ein oder mehrere Zuläufe (11) mit unterschiedlichen Dimensionen eingebracht sein, welche in ihrer Funktion ein Überlaufen sowohl des Schachtes, als auch ein Hineinlaufen des Wassers in die Öffnung (15) des Drosselelementes (10) verhindern können.
In einer nicht dargestellten alternativen Ausführungsform kann das Drosselelement (10) auch 180° versetzt zu seiner Längsachse in dem Schacht (20) eingebracht sein, d.h., der Abfluß (12) dichtet gegen den Zulauf (21), wobei das angestaute Niederschlagswasser durch den Zulauf (11) aus dem Drosselelement (10) abfließt.

Die dargestellte Ausführungsform der Versickerungsvorrichtung für Niederschlagswasser (1) ist in der Lage, das aus Niederschlägen und Schneeschmelzen anfallende Wasser zurückzuhalten und kontrolliert versickern zu lassen. Dies geschieht dadurch, daß das Niederschlagswasser in einer Versickerungsmulde, welche über einer Kies-Rigole angebracht ist, gespeichert wird, bevor es gefiltert durch die Vegetationsschicht zur KiesRigole gelangt und sich dort gleichmäßig in den Hohlräumen des Kieses und dann in den in diesen integrierten Sickerrohren kontrolliert weitergeleitet wird.

Weist die vorhandene Bodenschicht eine ausreichende Durchlässigkeit auf, erfolgt eine vollständige Versickerung des anfallenden Wassers im Untergrund. Wenn diese Durchlässigkeit des Bodens zu gering ist bzw. die anfallenden Wassermengen zu hoch sind, findet nur ein Teil des Wassers den Weg der Versickerung in den Untergrund. Das restliche Wasser wird im Kies gespeichert und über das Rohr über den Zulauf (21) in die erfindungsgemäße Vorrichtung für Niederschlagswasser (1) eingeleitet, in dieser gedrosselt und in eine mögliche nächste Rigole bzw. nach der Rigole in ein Vorfluter zeitverzögert abgegeben, so daß mehr von dem anfallenden Wasser versickern kann.

Durch die erfindungsgemäße Versickerungsvorrichtung für Niederschlagswasser kann schnell und funktionssicher gewährleistet werden, daß das Niederschlagswasser kontrolliert in die nächste Rigole bzw. in den Vorfluter abgegeben wird, wobei die Anstauhöhe berücksichtigt werden kann.

## Patentansprüche

1. Versickerungsvorrichtung (1) für Niederschlagswasser mit einem Schacht (20) sowie einem in diesem befindlichen Drosselelement(10), wobei der Schacht (20) einen Wasserzulauf (21), einen Wasserüberlauf und einen Wasserablauf (22) aufweist, wobei der freie Strömungsquerschnitt des Wasserablaufes (22) veränderbar ist und wobei das Drosselelement (10) lösbar im Schacht (20) positioniert ist,
**dadurch gekennzeichnet,**
**daß** das Drosselelement (10) als Behälter ausgeführt ist, daß sich zwischen der Zulaufseite (111) des Drosselelementes (10) und derZulaufseite (211)des Schachtes (20) ein Stauraum (300) befindet und daß die Abläufe (12, 22) des Drosselelementes (10) und des Schachtes (20) dichtend aneinanderliegen.

2. Versickerungsvorrichtung nach Anspruch 1, **dadurch gekennzeichnet, daß** die Zulaufseite (111) des Drosselelementes (10) wenigstens einen Zulauf (11) aufweist, der variabel einstellbar ist.

3. Versickerungsvorrichtung nach Anspruch 1, **dadurch gekennzeichnet, daß** die Zulaufseite (111) des Drosselelementes (10) wenigstens einen Zulauf (11) aufweist, der fest einstellbar ist.

4. Versickerungsvorrichtung nach einem der vorhergehenden Ansprüche, **dadurch gekennzeichnet, daß** die Ablaufseite (121) des Drosselelementes (10) einen Abfluß (12) aufweist, der annähernd dem Ablauf (22) des Schachtes (20) entspricht.

5. Versickerungsvorrichtung nach einem der vorhergehenden Ansprüche, **dadurch gekennzeichnet, daß** das Drosselelement (10) mit wenigstens einem freien Ende (13) ein Arretierelement (23) des Schachtes (20) fixierend hintergreift.

6. Versickerungsvorrichtung nach einem der vorhergehenden Ansprüche, **dadurch gekennzeichnet, daß** das Drosselelement (10) an seinem einen freien Ende (113) eine Öffnung (15) aufweist.

7. Versickerungsvorrichtung nach einem der vorhergehenden Ansprüche, **dadurch gekennzeichnet, daß** das Drosselelement (10) im Bereich seines freien Endes (113) ein Klemmelement (16) aufweist.

8. Versickerungsvorrichtung nach Anspruch 7, **dadurch gekennzeichnet, daß** das Klemmelement (16) das Drosselelement (10) im Schacht (20) verspannt.

9. Versickerungsvorrichtung nach Anspruch 7 bis 8, **dadurch gekennzeichnet, daß** durch Entspannung des Klemmelementes (16) das Drosselelement (10) aus dem Schacht (20) entnehmbar ist.

10. Versickerungsvorrichtung nach Anspruch 7 bis 9, **dadurch gekennzeichnet, daß** das Klemmelement (16) ein beweglicher Bügel ist.

11. Versickerungsvorrichtung nach Anspruch 7 bis 10, **dadurch gekennzeichnet, daß** das Klemmelement (16) ein Knebel, ein Exzenter, ein Keil und dergleichen ist.

## Claims

1. Percolation device (1) for precipitation water, with a well (20) and with a throttle element (10) located in the latter, the well (20) having a water inflow (21), a water overflow and a water outflow (22), the free flow cross section of the water outflow (22) being variable, and the throttle element (10) being positioned releasably in the well (20), **characterized in that** the throttle element (10) is designed as a container, **in that** a build-up space (300) is located between the inflow side (111) of the throttle element (10) and the inflow side (211) of the well (20), and **in that** the outflows (12, 22) of the throttle element (10) and of the well (20) bear sealingly one against the other.

2. Percolation device according to Claim 1, **characterized in that** the inflow side (111) of the throttle element (10) has at least one inflow (11) which can be set variably.

3. Percolation device according to Claim 1, **characterized in that** the inflow side (111) of the throttle element (10) has at least one inflow (11) which can be set permanently.

4. Percolation device according to one of the preceding claims, **characterized in that** the outflow side (121) of the throttle element (10) has an outflow (12) which corresponds approximately to the outflow (22) of the well (20).

5. Percolation device according to one of the preceding claims, **characterized in that** the throttle element (10) engages fixingly with at least one free end (13) behind a detaining element (23) of the well (20).

6. Percolation device according to one of the preceding claims, **characterized in that** the throttle element (10) has an orifice (15) at its one free end (113) .

7. Percolation device according to one of the preceding claims, **characterized in that** the throttle element (10) has a clamping element (16) in the region of its free end (113).

8. Percolation device according to Claim 7, **characterized in that** the clamping element (16) tensions the throttle element (10) in the well (20).

9. Percolation device according to Claims 7 and 8, **characterized in that** the throttle element (10) can be removed from the well (20) as a result of the detensioning of the clamping element (16).

10. Percolation device according to Claims 7 to 9, **characterized in that** the clamping element (16) is a moveable strap.

11. Percolation device according to Claims 7 to 10, **characterized in that** the clamping element (16) is a toggle, an eccentric, a wedge and the like.

## Revendications

1. Dispositif d'infiltration (1) pour l'eau de pluie comprenant un puits (20) ainsi qu'un élément d'étranglement (10) situé dans celui-ci, le puits (20) présentant une entrée d'eau (21), un trop-plein d'eau et une sortie d'eau (22), la section transversale d'écoulement libre de la sortie d'eau (22) pouvant être modifiée et l'élément d'étranglement (10) étant positionné de manière détachable dans le puits (20),
**caractérisé en ce que**
l'élément d'étranglement (10) est réalisé en tant que récipient, **en ce qu'**un espace d'accumulation (300) se trouve entre le côté d'entrée (111) de l'élément d'étranglement (10) et le côté d'entrée (211) du puits (20) et **en ce que** les sorties (12, 22) de l'élément d'étranglement (10) et du puits (20) sont situées hermétiquement l'une contre l'autre.

2. Dispositif d'infiltration selon la revendication 1, **caractérisé en ce que** le côté d'entrée (111) de l'élément d'étranglement (10) présente au moins une entrée (11) qui peut être ajustée de manière variable.

3. Dispositif d'infiltration selon la revendication 1, **caractérisé en ce que** le côté d'entrée (111) de l'élément d'étranglement (10) présente au moins une entrée (11) qui peut être ajustée de manière fixe.

4. Dispositif d'infiltration selon l'une quelconque des revendications précédentes, **caractérisé en ce que** le côté de sortie (121) de l'élément d'étranglement (10) présente une évacuation (12) qui correspond approximativement à la sortie (22) du puits (20).

5. Dispositif d'infiltration selon l'une quelconque des revendications précédentes, **caractérisé en ce que** l'élément d'étranglement (10), avec au moins une extrémité libre (13), vient en prise par l'arrière en le fixant avec un élément de blocage (23) du puits (20).

6. Dispositif d'infiltration selon l'une quelconque des revendications précédentes, **caractérisé en ce que** l'élément d'étranglement (10) présente une ouverture (15) à son extrémité libre (113).

7. Dispositif d'infiltration selon l'une quelconque des revendications précédentes, **caractérisé en ce que** l'élément d'étranglement (10) présente un élément de serrage (16) dans la région de son extrémité libre (113).

8. Dispositif d'infiltration selon la revendication 7, **caractérisé en ce que** l'élément de serrage (16) serre l'élément d'étranglement (10) dans le puits (20).

9. Dispositif d'infiltration selon la revendication 7 ou 8, **caractérisé en ce que** l'élément d'étranglement (10) peut être enlevé du puits (20) par desserrage de l'élément de serrage (16).

10. Dispositif d'infiltration selon les revendications 7 à 9, **caractérisé en ce que** l'élément de serrage (16) est un étrier mobile.

11. Dispositif d'infiltration selon les revendications 7 à 10, **caractérisé en ce que** l'élément de serrage (16) est un garrot, un excentrique, une clavette ou similaire.
